# EUROPEAN PATENT APPLICATION

(11) **EP 3 780 019 A1**
(43) Date of publication of application: **17.02.2021**
(21) Application number: 19774366.9
(22) Date of filing: 20.03.2019
(51) Int. Cl.: H01B 13/00, H01B 12/10, H01F 6/06, H01R 4/68

(54) **METHOD FOR MANUFACTURING INSULATING SUPERCONDUCTIVE WIRE ROD**

(30) Priority: 26.03.2018 JP 2018058308
(71) Applicant: Mitsubishi Materials Corporation, Tokyo 100-8117 (JP)
(72) Inventor: SAKURAI Hideaki, Amagasaki-shi, Hyogo 660-0856 (JP); KOMAI Eiji, Yokkaichi-shi, Mie 510-0841 (JP)
(74) Representative: Gille Hrabal
(86) International application number: PCT/JP2019/011683
(87) International publication number: WO 2019/188654

(57) **Abstract**

A method of manufacturing an insulated superconducting wire material comprising the steps of: removing a flux (S01) by heating a superconducting wire material at a temperature equals to or higher than a flux volatilization temperature and equals to or lower than a heatproof temperature of the superconducting wire material, the superconducting wire material comprising a channel with a channel groove and a superconducting core wire material accommodated in the channel groove of the channel, and the channel groove and the superconducting core wire material being bonded with a solder including the flux; and forming an insulated superconducting wire material (S02) of forming an insulating film on a surface of the superconducting wire material.

## Description

### [Technical Field]

The present invention relates to a method manufacturing an insulated superconducting wire material in a wire-in-channel structure.

Priority is claimed on Japanese Patent Application No. 2018-058308 filed on March 26, 2018, the content of which is incorporated herein by reference.

### [Background Art]

As one of the insulated conductor wire materials, an insulated superconducting wire material in which the surface of the superconducting wire material is coated with an insulating film is known. This insulated superconducting wire material is used in fields such as a magnetic resonance imaging (MRI) device, a nuclear magnetic resonance (NMR) device, a particle accelerator, a linear motor car, and an electric power storage device.

As the superconducting wire material, one having the structure (wire material-in-channel (WIC) structure), in which a superconducting multi-core wire material (occasionally, referred as a superconducting core material) made of a metal matrix and multiple threads of superconducting filaments is accommodated and fixed in a channel groove of a channel with the channel groove (occasionally, referred as a stabilizing material), is known.

The WIC structure superconducting wire material is capable of temporarily diverting the current flowing through the superconducting multi-core wire material to the channel when the superconducting state of a superconducting multi-core wire material wire is partially broken and a transition to the normal conducting state occurs. In the meantime, it becomes possible to return the superconducting multi-core wire material to the superconducting state. Therefore, in the WIC structure superconducting wire material, it is necessary to coat the entire superconducting wire material with an insulating film so that the current diverted to the channel does not leak to the outside.

In Patent Literature 1, a method, in which a superconducting wire material is produced by bonding a superconducting multi-core wire material and a channel groove with a solder followed by coating the surface of the superconducting wire material with an insulating resin, curing the resin and heating at temperature for duration time that the solder is not melted, is disclosed as a manufacturing method of the insulated superconducting wire material in the WIC structure. In Patent Literature 1, methods, in which the superconducting wire material is passed through a tank holding an insulating film material; and an insulating resin is subjected to extrusion molding, are described as methods of coating the surface of the superconducting wire material with an insulating resin.

### [Prior Art Literature]

### [Patent Literature]

Patent Literature 1: European Patent No. 2118941 (B), Specification

### [Summary of Invention]

### [Technical Problem]

When air bubbles are formed in the insulation film of the insulated superconducting wire, the film thickness becomes thin at the part where the air bubbles are formed and the strength of the film is reduced. Therefore, the insulating film is likely to be damaged, and it could make it harder to maintain the superconductivity of the insulated superconducting wire for a long period of time. Therefore, the lesser bubble in the insulating film, the more preferable. However, in a superconducting wire having the WIC structure in which a superconducting core wire and the channel groove are bonded using a solder, the flux of the solder volatilizes during the formation of the insulating film, and bubbles tend to be formed in the insulating film.

The present invention has been made in view of the above-described circumstances, and an object thereof is to provide a method of manufacturing an insulated superconducting wire material that enables: an insulating film with less bubbles to be formed in a super conducting wire material in the WIC structure in which the channel groove and the superconducting core wire material are bonded with a solder; and a high super conductivity to be retained for a long period of time.

### [Solution to Problem]

In order to solve the above problems, a method for producing an insulated superconducting wire according to one aspect of the present invention (hereinafter, referred to as "method for producing an insulated superconducting wire according to the present invention") includes the steps of: removing a flux by heating a superconducting wire material at a temperature equals to or higher than a flux volatilization temperature and equals to or lower than a heatproof temperature of the superconducting wire material, the superconducting wire material comprising a channel with a channel groove and a superconducting core wire material accommodated in the channel groove of the channel, and the channel groove and the superconducting core wire material being bonded with a solder including the flux; and forming an insulated superconducting wire material of forming an insulating film on a surface of the superconducting wire material.

According to the method of manufacturing an insulated superconducting wire of the present invention, the flux contained in the solder is removed in the flux removing step, so that the flux is less likely to volatilize in the insulating film forming step. Therefore, it is possible to form an insulating film with few bubbles.

In the method of manufacturing an insulated superconducting wire material of the present invention, it is preferable that the superconducting wire material is a superconducting multi-core wire material made of a metal matrix and superconducting filaments embedded in the metal matrix.

In this case, the superconducting core wire is a superconducting multi-core wire consisting of a metal matrix and a plurality of superconducting filaments embedded in the metal matrix, and since it has high superconductivity, higher superconductivity can be maintained in the obtained insulated superconducting wire over a long period of time.

In the method of manufacturing an insulated superconducting wire material of the present invention, it is preferable that an outer surface of the channel of the superconducting wire is covered with the solder.

Even in this case, since the flux contained in the solder on the outer surface of the channel is removed in the flux removing step, it is possible to form an insulating film with few bubbles on the outer surface of the channel.

### [Advantageous Effects of Invention]

According to the present invention, a method of manufacturing an insulated superconducting wire material that enables: an insulating film with less bubbles to be formed in a super conducting wire material in the WIC structure in which the channel groove and the superconducting core wire material are bonded with a solder; and a high super conductivity to be retained for a long period of time, is provided.

### [Brief Description of Drawings]

Fig. 1 is a flow chart of a method of manufacturing an insulated superconducting wire according to an embodiment of the present invention.
Fig. 2 is cross-sectional view of an example of a superconducting wire that can be used in the method of manufacturing an insulated superconducting wire according to the present embodiment.
Fig. 3 is a cross-sectional view of an example of an insulated superconducting wire obtained by the method of manufacturing an insulated superconducting wire according to the present embodiment.
Fig. 4 is a cross-sectional view of another example of a superconducting wire that can be used in the method of manufacturing an insulated superconducting wire according to the present embodiment.
Fig. 5 is a cross-sectional view of another example of an insulated superconducting wire obtained by the method of manufacturing an insulated superconducting wire according to the present embodiment.

### [Description of Embodiments]

Hereinafter, a method of manufacturing an insulated superconducting wire according to an embodiment of the present invention will be described with reference to the attached drawings.

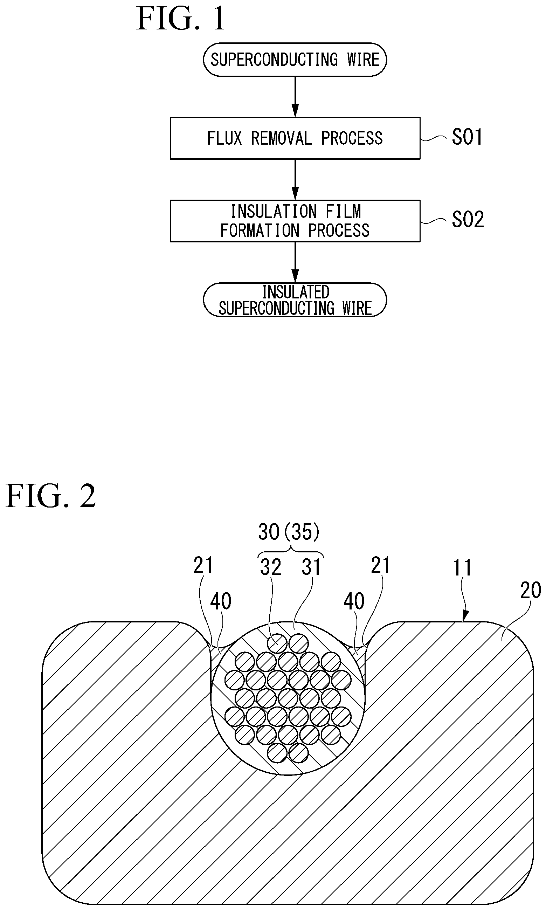

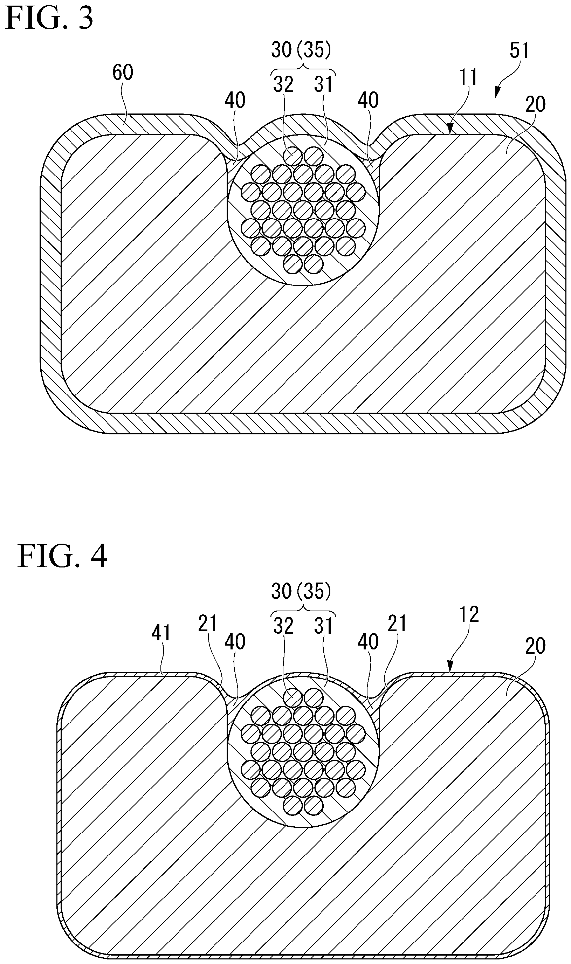

Fig. 1 is a flow chart of a method of manufacturing an insulated superconducting wire according to an embodiment of the present invention. Fig. 2 is a cross-sectional view of an example of a superconducting wire that can be used in the method of manufacturing an insulated superconducting wire according to this embodiment. Fig. 3 is a cross-sectional view of an example of an insulated superconducting wire obtained by the method of manufacturing an insulated superconducting wire according to the present embodiment.

The method of manufacturing an insulated superconducting wire according to the present embodiment is a method of manufacturing an superconducting wire including a superconducting wire having a WIC structure in which a channel groove of a channel and a superconducting core wire are bonded with solder, and an insulating film formed on the surface of the superconducting wire.

As shown in Fig. 1, the method of manufacturing an insulated superconducting wire according to the present embodiment includes the flux removing step S01 for removing the flux contained in the solder of the superconducting wire material and the insulating film forming step S02 for forming the insulating film on the surface of the superconducting wire material.

### (Superconducting wire material)

As shown in Fig. 2, the superconducting wire material 11 includes a channel 20 having a channel groove 21 and a superconducting core wire 35 accommodated and fixed in the channel groove 21. The cross-sectional shape of the superconducting wire material 11 is a substantially quadrangular shape with corners having a curvature. The superconducting core wire 35 is a superconducting multi-core wire 30 including a metal matrix 31 and superconducting filaments 32 embedded in the metal matrix 31. The channel groove 21 and the superconducting multi-core wire 30 are bonded by the solder 40. In the superconducting wire material 11 shown in Fig. 2, the cross-sectional shape of the superconducting multi-core wire 30 is circular. However, the cross-sectional shape of the superconducting multi-core wire 30 is not particularly limited thereto, and it may be a rectangular shape having a curvature at the corner, for example.

The material of the channel 20 may be copper, copper alloy, aluminum, aluminum alloy, for example. As the material of the metal matrix 31 of the superconducting multi-core wire 30, for example, copper, copper alloy, aluminum or aluminum alloy can be used. As a material of the superconducting filament 32 of the superconducting multi-core wire 30, NbTi alloy or Nb₃Sn can be used.

Sn-based solder can be used as the solder 40. As the Sn-based solder, an alloy of Sn and at least one metal selected from the group consisting of Sb, Ag, and Cu can be used. The solder 40 is preferably a Sn-Sb based solder or a Sn-Ag based solder.

The solder 40 contains flux. The type of flux is not particularly limited, and various types of flux such as resin type, organic type and inorganic type can be used. Examples of the flux that can be used for this purpose include a main agent (mainly rosin), an activator (carboxylic acid, amine salt, bromine-based (HBr salt)), solvent (glycol-based, ester-based, alcohol-based), additive (antioxidant, etc.).

The superconducting wire material 11 can be manufactured, for example, as follows.

First, the channel groove 21 of the channel 20 is filled with molten solder. Next, the superconducting multi-core wire 30 is accommodated in the channel groove 21 of the channel 20. Then, the molten solder is cooled and solidified.

### (Flux removing step S01)

In the flux removing step S01, the superconducting wire material 11 is heated to remove the flux contained in the solder 40. The heating temperature of the superconducting wire material 11 is equal to or higher than the volatilization temperature of the flux and lower than or equal to the heatproof temperature of the superconducting wire material 11.

The volatilization temperature of the flux is the temperature at which 80% or more of the flux component contained in the solder 40 decomposes or evaporates and disappears when the solder 40 is heated. The volatilization temperature of the flux can be measured, for example, by the thermogravimetric method.

The heatproof temperature of the superconducting wire material 11 is a temperature at which the superconducting critical current value measured at a temperature of 4.2 K (Kelvin) is 1% lower than that before heating when the superconducting wire material 11 is heated.

In view of flux removal efficiency, the heating temperature of the superconducting wire material 11 is preferably at a temperature +10°C or higher than the flux volatilization temperature, and particularly preferably at a temperature +20°C or higher than the volatilization temperature.

Further, in view of suppressing a decrease in the superconducting critical current value of the superconducting wire material 11, the heating temperature of the superconducting wire material 11 is preferably at a temperature lower than -10°C than the heatproof temperature of the superconducting wire material 11, and particularly preferably at a temperature lower than -20°C than the heatproof temperature of the superconducting wire material 11. Specifically, the heating temperature of superconducting wire material 11 is preferably in the range of 230°C or higher and 290°C or lower. It is preferable to heat the superconducting wire material 11 by high frequency induction heating. When the superconducting wire material 11 is heated by high-frequency induction heating, the solder itself, which is a conductor, self-heats. Therefore, even if a large amount of solder is filled between the channel groove 21 and the superconducting multi-core wire 30, the existing flux included in the solder can be removed efficiently.

The heating time of the superconducting wire material 11 varies depending on conditions such as the amount of the solder 40 of the superconducting wire material 11 and the heating temperature, but is usually within a range of 0.1 minutes to 10 minutes. The pressure condition during heating is not particularly limited, and may be under normal pressure (under atmospheric pressure), under reduced pressure, or under pressure. The heating atmosphere may be an air atmosphere or an inert gas atmosphere. As the inert gas, for example, nitrogen gas or argon gas can be used.

### (Insulating film forming step S02)

In the insulating film forming step S02, an insulating film is formed on the surface of the superconducting wire material 11 from which the flux has been removed in the flux removing step S01. As a method of forming the insulating film on the surface of the superconducting wire material 11, for example, a coating method or an electrodeposition method can be used.

In the coating method, a varnish containing an insulating resin for forming an insulating film and a solvent is applied to the surface of the superconducting wire material 11 to form a coating layer, and then the coating layer is heated to form the insulating film on the superconducting wire material 11 for a formed film to be baked on the superconducting wire material 11. As an insulating resin for forming an insulating film, a material generally used for an insulating film of an insulating conductive wire material such as formalized polyvinyl alcohol resin, polyvinyl alcohol resin, polyamideimide resin, polyimide resin, polyesterimide resin, polyester resin, polyurethane resin can be used. As a method of applying the varnish to the surface of the superconducting wire material 11, a dipping method of immersing the superconducting wire material 11 in the varnish can be used. The heating temperature for heating the coating layer and baking the formed insulating film on the superconducting wire material 11 is, for example, in the range of 200°C or higher and 450°C or lower, and the heating time is, for example, in the range of 0.5 minutes or longer and 4 minutes or shorter.

In the electrodeposition method, the superconducting wire material 11 and the electrode are immersed in an electrodeposition dispersion in which electrically insulating resin particles are dispersed, and a DC voltage is applied between the superconducting wire material 11 and the electrode to form the superconducting wire. This is a method in which insulating resin particles are electrodeposited on the surface of 11 to form an electrodeposition layer, and then the electrodeposition layer is heated and the formed insulating film is baked onto the superconducting wire material 11. The electrodeposition dispersion can be prepared, for example, by adding a poor solvent for the insulating resin or water to the insulating resin solution. The heating temperature for heating the electrodeposition layer and baking the formed insulating film on the superconducting wire material 11 is the same as in the case of the above coating method.

### (Insulated superconducting wire)

The insulated superconducting wire 51 manufactured as described above includes the superconducting wire material 11 and the insulating film 60 that covers the surface of the superconducting wire material 11, as shown in Fig. 3. The thickness of the insulating film 60 is usually in the range of 3 µm or more and 60 µm or less.

### (Modified Example)

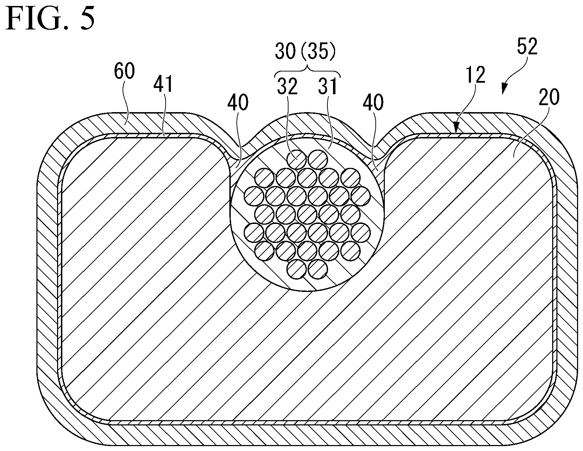

In the superconducting wire material 11 shown in Fig. 2, the solder 40 is filled only between the channel groove 21 of the channel 20 and the superconducting multi-core wire 30, but the outer surface of the channel 20 may be covered with the solder 40. Fig. 4 shows a superconducting wire in which the outer surface of the channel 20 is covered with solder 40, and Fig. 5 shows an insulated superconducting wire manufactured using the superconducting wire.

As shown in Figs. 4 and 5, the superconducting wire 12 is provided with a solder layer 41 covering the entire outer surface of the channel 20 and the superconducting multi-core wire 30. The superconducting wire 12 shown in Fig. 4 and insulated superconducting wire 52 shown in Fig. 5 are similar to superconducting wire material 11 shown in Fig. 2 and insulated superconducting wire 51 shown in Fig. 3 except that solder layer 41 is formed. Therefore, the same components are designated by the same reference numerals, and detailed description thereof will be omitted.

The solder layer 41 is continuously formed with the solder 40 that bonds the channel groove 21 and the superconducting multi-core wire 30. The thickness of the solder layer 41 is not particularly limited, but is usually in the range of 0.1 µm or more and 5.0 µm or less.

The superconducting wire 12 can be manufactured, for example, as follows. First, a molten solder bath is prepared. Next, the superconducting multi-core wire 30 and the channel 20 are respectively immersed in this molten solder bath, and the superconducting multi-core wire 30 is accommodated in the channel groove 21 in the molten solder bath. Then, the superconducting multi-core wire 30 and the channel 20 are pulled up from the molten solder bath. Then, the molten solder filled between the channel groove 21 and the superconducting multicore wire 30 and the molten solder adhering to the outer surface of the channel groove 21 and the superconducting multicore wire 30 are cooled and solidified.

When manufacturing the insulated superconducting wire 52 using the above superconducting wire 12 is performed, the flux contained in the solder 40 and the solder layer 41 is removed in the flux removing step S01. The heating temperature and heating time of the superconducting wire 12 are the same as those when the above-mentioned superconducting wire material 11 is used.

Next, in the insulating film forming step S02, an insulating film is formed on the surface of the superconducting wire 12. As a method of forming the insulating film, a coating method or an electrodeposition method can be used as in the case of using the above-mentioned superconducting wire material 11.

In the insulated superconducting wire 52 manufactured as described above, the insulating film 60 is formed only on the surface of the solder layer 41 as shown in Fig. 5. In the superconducting wire 12, the solder layer 41 is formed on the entire outer surfaces of the channel 20 and the superconducting multi-core wire 30, and the outer surface is in a uniform state, predisposing the adhesion between the superconducting wire 12 and the insulating film 60 to be uniform.

In the superconducting wire 12 shown in Fig. 4, the solder layer 41 covering the entire outer surfaces of the channel 20 and the superconducting multi-core wire 30 is formed. Alternatively, the solder layer 41 may be provided only on the outer surface of the channel 20. The superconducting wire having the solder layer 41 provided only on the outer surface of the channel 20 can be manufactured, for example, as follows.

First, a molten solder bath is prepared. Next, the channel 20 is immersed in this molten solder bath to fill the channel groove 21 with molten solder. Next, after pulling up the channel 20 from the molten solder bath, the superconducting multicore wire 30 is accommodated in the channel groove 21. Then, the molten solder filled between the channel groove 21 and the superconducting multi-core wire 30 and the molten solder adhering to the outer surface of the channel groove 21 are cooled and solidified.

According to the method for manufacturing an insulated superconducting wire of the present embodiment configured as described above, the flux is removed from the solder 40 bonding the channel groove 21 and the superconducting multi-core wire 30 in the flux removing step S01. Since the existing flux is removed, it is difficult for the flux to volatilize when the insulating film 60 is formed in the insulating film forming step S02. Therefore, it is possible to suppress the formation of bubbles in the insulating film 60 due to the volatilization of the flux.

Further, in the method for manufacturing an insulated superconducting wire according to the present embodiment, the superconducting core wire 35 is a superconducting multi-core wire 30 including a metal matrix 31 and a plurality of superconducting filaments 32 embedded in the metal matrix 31. Since it has a high superconductivity, the obtained insulated superconducting wires 51 and 52 can maintain a higher superconductivity for a long period of time.

Further, in the method for manufacturing an insulated superconducting wire according to the present embodiment, even if the solder layer 41 covering the entire outer surfaces of the channel 20 and the superconducting multi-core wire 30 is formed, the flux removing step S01 removes the solder layer 41 from the solder layer 41. Since the flux contained in the solder is removed, the flux is less likely to volatilize when the insulating film 60 is formed in the insulating film forming step S02. Therefore, the insulating film 60 with few bubbles can be formed on the outer surface of the solder layer 41.

The embodiment of the present invention has been described above. However, the present invention is not limited thereto, and can be appropriately modified without departing from the technical concept of the present invention.

For example, in the present embodiment, the superconducting multi-core wire 30 is used as the superconducting core wire 35. However, the present invention is not limited thereto. For example, as the superconducting core wire 35, a single metal wire may be used.

### [Example]

Next, effects of the present invention will be described with reference to examples.

### [Example 1]

As a superconducting multi-core wire, a wire having a circular cross section (diameter: 0.66 mm) made of a copper base material and an NbTi alloy filament embedded in the base material was prepared. As the channel, a copper channel provided with a channel groove (groove width: 0.66 mm) was prepared. Sn₉₅Sb₅ solder (solder melting point: 238°C, flux volatilization temperature: 200°C) was prepared as solder.

The above-mentioned Sn₉₅Sb₅ solder was put into a solder bath and heated to 290°C to be melted to prepare a molten solder bath. Next, the superconducting multi-core wire material and the channel were immersed in this molten solder bath, respectively, and the superconducting multi-core wire material was accommodated in the channel groove in the molten solder bath. Next, the superconducting multicore wire and the channel are pulled up from the molten solder bath, and the molten solder filled between the channel groove and the superconducting multicore wire and the molten solder adhering to the outer surface of the channel groove and the superconducting multicore wire were cooled and solidified. In this way, a superconducting wire having a solder layer as shown in Fig. 4 was obtained. The obtained superconducting wire had a heatproof temperature of 300°C.

### (Flux removal process)

The obtained superconducting wire was heated at a temperature of 270°C for 1 minute under atmospheric pressure using a high-frequency induction heating furnace to remove the flux contained in the Sn₉₅Sb₅ solder. Then, it was cooled to room temperature.

### (Insulation film formation process)

An insulated superconducting wire was manufactured by forming an insulating film on the surface of the superconducting wire from which flux had been removed by the electrodeposition method. Specifically, a superconducting wire and an electrode were immersed in an electrodeposition dispersion containing polyamideimide (PAI) particles having a negative charge and water, and a DC voltage was applied with the superconducting wire as a positive electrode and the electrode as a negative electrode. Then, PAI particles were electrodeposited on the surface of the superconducting wire so that the thickness of the film after drying was 40 µm to form an electrodeposition layer. Next, the superconducting wire having the electrodeposited layer was dried and baked at 280°C for 4 minutes.

The entire surface of the insulating film of the obtained insulated superconducting wire was observed with a microscope and the number of bubbles with a diameter of 100 µm or more was counted. The number of bubbles is shown in Table 1 as the number of bubbles per 1 m of the insulated superconducting wire (cells/m).

### [Example 2]

A superconducting wire was obtained in the same manner as in Example 1 of the present invention, except that Sn₉₇Ag₃ solder (solder melting point: 221°C, flux volatilization temperature: 200°C) was used instead of Sn₉₅Sb₅ solder. Next, the flux of Sn₉₇Ag₃ solder was removed in the same manner as in Example 1 of the present invention except that the heating temperature in the flux removal step was 250°C. Then, in the same manner as in Example 1 of the present invention , an insulating film was formed on the surface of the superconducting wire from which the flux had been removed by the electrodeposition method to manufacture an insulated superconducting wire, and the number of bubbles in the insulating film was counted. The results are shown in Table 1.

### [Comparative Example 1]

An insulated superconducting wire was manufactured and the number of bubbles in the insulating film was counted in the same manner as in Example 1 of the present invention except that the heating temperature in the flux removing step was 190°C. The results are shown in Table 1.

### [Comparative Example 2]

An insulated superconducting wire was manufactured in the same manner as in Example 2 of the present invention except that the heating temperature in the flux removing step was 180°C, and the number of bubbles in the insulating film was counted. The results are shown in Table 1.

**[Table 1]**

| | Solder | | Superconducting wire material | Flux removal step | Evaluation |
|---|---|---|---|---|---|
| | Composition | Flux volatilization temperature (°C) | Heatproof temperature (°C) | Heating temperature (°C) | Number of bubbles in the insulating film covering solder (bubbles/m) |
| Example 1 | Sn₉₅Sb₅ | 200 | 300 | 270 | 0 |
| Example 2 | Sn₉₇Ag₃ | 200 | 300 | 250 | 1 |
| Comparative Example 1 | Sn₉₅Sb₅ | 200 | 300 | 190 | 35 |
| Comparative Example | Sn₉₇Ag₃ | 200 | 300 | 180 | 57 |

The insulated superconducting wires obtained in Comparative Examples 1 and 2 in which the heating temperature in the flux removing step was lower than the volatilization temperature of the flux had many bubbles in the insulating film. It is considered that this is because the flux not removed in the flux removing step volatilized during the drying/baking step in the insulating film forming step.

On the other hand, the insulated superconducting wire obtained in each of Examples 1 and 2 of the present invention, in which the heating temperature in the flux removing step was not lower than the volatilization temperature of the flux and not more than the heatproof temperature of the superconducting wire, it was confirmed that the number of bubbles in was significantly reduced.

### [Industrial Applicability]

According to the present invention, a method of manufacturing an insulated superconducting wire material that enables: an insulating film with less bubbles to be formed in a super conducting wire material in the WIC structure in which the channel groove and the superconducting core wire material are bonded with a solder; and a high super conductivity to be retained for a long period of time, is provided.

### [Reference Signs List]

11, 12: Superconducting wire material
20: Channel
21: Channel groove
30: Superconducting multi-core wire material
31: Metal matrix
32: Superconducting filament
35: Superconducting core wire material
40: Solder
41: Solder layer
51, 52: Insulated superconducting wire material
60: Insulating film

## Claims

1. A method of manufacturing an insulated superconducting wire material comprising the steps of:
removing a flux by heating a superconducting wire material at a temperature equals to or higher than a flux volatilization temperature and equals to or lower than a heatproof temperature of the superconducting wire material, the superconducting wire material comprising a channel with a channel groove and a superconducting core wire material accommodated in the channel groove of the channel, and the channel groove and the superconducting core wire material being bonded with a solder including the flux; and
forming an insulated superconducting wire material of forming an insulating film on a surface of the superconducting wire material.

2. The method of manufacturing an insulated superconducting wire material according to claim 1, wherein the superconducting wire material is a superconducting multi-core wire material made of a metal matrix and superconducting filaments embedded in the metal matrix.

3. The method of manufacturing an insulated superconducting wire according to claim 1 or 2, wherein an outer surface of the channel of the superconducting wire is covered with the solder.
